# FASCICULE DE BREVET EUROPEEN

(11) **EP 2 577 091 B1**
(45) Date de publication et mention de la délivrance du brevet: **14.05.2014**
(21) Numéro de dépôt: 11727267.4
(22) Date de dépôt: 25.05.2011
(51) Int. Cl.: F16F 15/123, F16F 15/129

(54) **DISPOSITIF D'AMORTISSEMENT ANGULAIRE EQUIPE DE MOYENS DE FROTTEMENT VARIABLES EN FONCTION DE LA VITESSE DE ROTATION**
WINKELDÄMPFUNGSVORRICHTUNG MIT JE NACH DREHGESCHWINDIGKEIT VARIABLER REIBUNGSVORRICHTUNG
ANGULAR DAMPING DEVICE FITTED WITH FRICTION MEANS WHICH CAN BE VARIED ACCORDING TO THE ROTATION SPEED

(30) Priorité: 01.06.2010 FR 1054239
(43) Date de publication de la demande: 10.04.2013
(73) Titulaire: Valeo Embrayages, 80009 Amiens Cedex 2 (FR)
(72) Inventeur: VERHOOG, Roel, F-60190 Gournay Sur Aronde (FR)
(86) Numéro de dépôt international: PCT/FR2011/051188
(87) Numéro de publication internationale: WO 2011/151570

(56) Documents cités:
- EP-A2- 0 482 735
- WO-A1-2009/015632

## Description

La présente invention concerne un dispositif d'amortissement angulaire pour un système d'accouplement temporaire humide de véhicule automobile.

La présente invention concerne plus particulièrement un dispositif d'amortissement angulaire entre un premier arbre et un deuxième arbre coaxiaux dans un système d'accouplement temporaire humide de véhicule automobile et qui comporte :
- un voile radial qui est destiné à être lié en rotation au premier arbre ;
- deux rondelles radiales de guidage qui sont agencée axialement de part et d'autre du voile et qui sont liées en rotation au deuxième arbre ;
- au moins deux organes élastiques à action circonférentielle qui sont intercalés circonférentiellement en série entre le voile et les rondelles de guidage ;
- un organe de phasage qui comporte au moins une patte radiale de phasage qui est interposée circonférentiellement entre les deux organes élastiques en série, l'organe de phasage comportant au moins deux éléments de frottement qui sont susceptibles d'être poussés axialement vers les deux rondelles radiales de guidage par application d'une force axiale de serrage pour être serrés axialement contre chacune des rondelles de guidage.

Un tel dispositif d'amortissement est généralement utilisé dans des systèmes d'embrayage automatique, du type convertisseur de couple, pour transmettre un couple entre un arbre de turbine et un embrayage de verrouillage à friction.

Un tel dispositif est aussi susceptible d'être utilisé dans un embrayage à friction dit "humide".

Un tel dispositif d'amortissement est notamment utilisé pour filtrer les vibrations en provenance du moteur, notamment grâce à des organes élastiques et des moyens de frottement associés dits "hystérésis".

Les dispositifs d'amortissement de ce type, comme présenté dans le document WO 2009/015632 sont très efficaces pour atténuer des vibrations dans certaines plages de fréquences déterminées. Cependant, on a observé un phénomène de résonnance dont la fréquence et le niveau varient en fonction de la vitesse de rotation du dispositif d'amortissement, d'une part, et du couple transmis, d'autre part.

La présente invention a pour objet de pallier cet inconvénient en proposant un dispositif d'amortissement du type décrit précédemment, caractérisé en ce que chaque élément de frottement comporte au moins une face de retenue d'au moins l'un des organes élastique à l'encontre de la force centrifuge, les faces de retenue étant agencées à distance axialement l'une de l'autre et l'organe élastique étant inséré partiellement entre les deux faces de retenue à la manière d'un coin de manière que la composante axiale de la force centrifuge exercée sur chaque face de retenue par l'organe élastique serre chaque élément de frottement contre la rondelle de guidage associée avec une force dynamique de serrage.

Selon d'autres caractéristiques de l'invention :
- chaque face de retenue est en contact avec l'organe élastique selon angle d'appui qui est compris entre 1° et 89° par rapport à la direction radiale ;
- l'angle d'appui est compris entre 15° et 45° ;
- une force de serrage statique est appliquée en permanence par des moyens élastiques de serrage pour pousser les éléments de frottement ;
- chaque élément de frottement est formé par une patte élastiquement déformable en flexion, ladite patte déformable étant montée précontrainte contre la rondelle de guidage associée ;
- au moins l'une des pattes déformables est formée par une patte de phasage ;
- la face interne des deux rondelles de guidage comportent des rampes en vis-à-vis de manière à faire varier la position axiale des faces de frottement par rapport à une face de réaction de manière que la force de serrage statique varie en fonction de la position angulaire de l'organe de phasage par rapport aux rondelles de guidage.

D'autres caractéristiques et avantages de l'invention apparaîtront à la lecture de la description détaillée qui va suivre pour la compréhension de laquelle on se reportera aux dessins annexés parmi lesquels :
- la figure 1 est une vue en perspective éclatée qui représente un dispositif d'amortissement réalisé selon les enseignements de l'invention ;
- la figure 2 est une vue en perspective éclatée qui représente les organes élastiques, le voile et l'organe de phasage du dispositif de la figure 1 ;
- la figure 3 est une vue axiale du dispositif d'amortissement selon les enseignements de l'invention dans lequel une rondelle de guidage a été ôtée pour permettre de voir l'intérieur du dispositif d'amortissement ;
- la figure 4 est une vue en coupe axiale du dispositif d'amortissement dans laquelle les éléments de frottement du dispositif sont visibles ;
- la figure 5 est une vue schématique en coupe axiale qui représente la force d'un organe élastique soumis à la force centrifuge exercée sur les faces de retenues d'éléments de frottement de l'élément de phasage équipant le dispositif d'amortissement réalisé selon les enseignements de l'invention ;
- la figure 6 est une vue schématique selon une direction radiale orientée vers l'intérieur du dispositif d'amortissement, qui représente les faces internes des rondelles de guidage qui sont équipées de rampes contre lesquelles frottent les éléments de frottement de l'organe de phasage.

Pour la suite de la description, on adoptera des orientations :
- axiale dirigée d'arrière en avant selon l'axe de rotation du dispositif d'amortissement, et indiquée par la flèche "A" des figures,
- radiale dirigées orthogonalement à l'axe du dispositif d'amortissement de l'intérieur vers l'extérieur en s'éloignant dudit axe ;
- circonférentielle dirigée orthogonalement à l'axe du dispositif d'amortissement et orthogonalement aux directions radiales.

Pour la suite de la description, des éléments présentant des fonctions similaires, identiques ou analogues seront désignés par des mêmes numéros de référence.

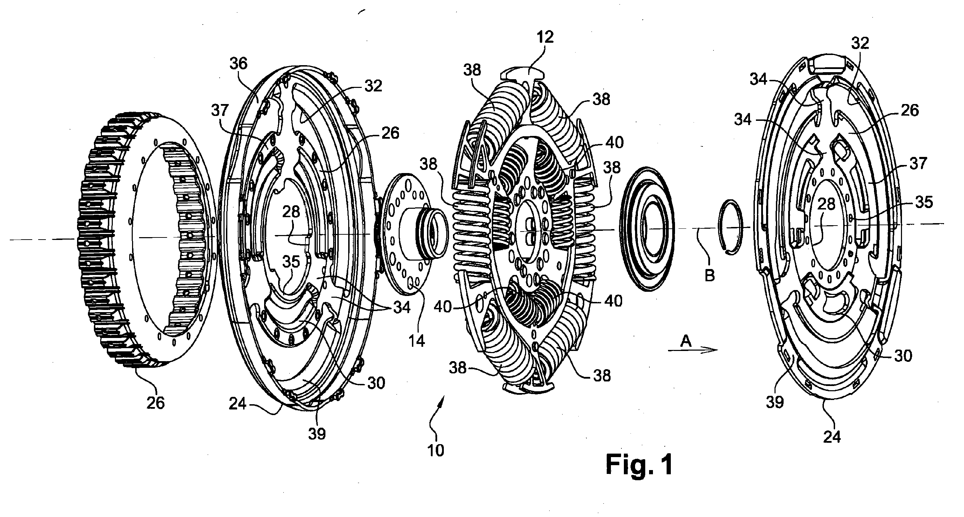

On a représenté à la figure 1 un dispositif 10 d'amortissement angulaire qui est destiné à être agencé dans un système d'accouplage temporaire de véhicule automobile. Le dispositif 10 d'amortissement est ici destiné à être agencé dans un convertisseur de couple (non représenté) dit "humide" pour accoupler avec amortissement angulaire une turbine du convertisseur avec un embrayage de verrouillage du convertisseur.

Le dispositif d'amortissement angulaire réalisé selon les enseignements de l'invention est aussi applicable à tout autre type de systèmes d'embrayage dits "humides" dans lesquels le dispositif 10 d'amortissement est susceptible d'être plongé dans un liquide tel que de l'huile.

Le dispositif 10 d'amortissement angulaire permet d'accoupler un premier arbre (non représenté) moteur et un deuxième arbre (non représenté) mené coaxiaux d'axe "B" avec amortissement angulaire.

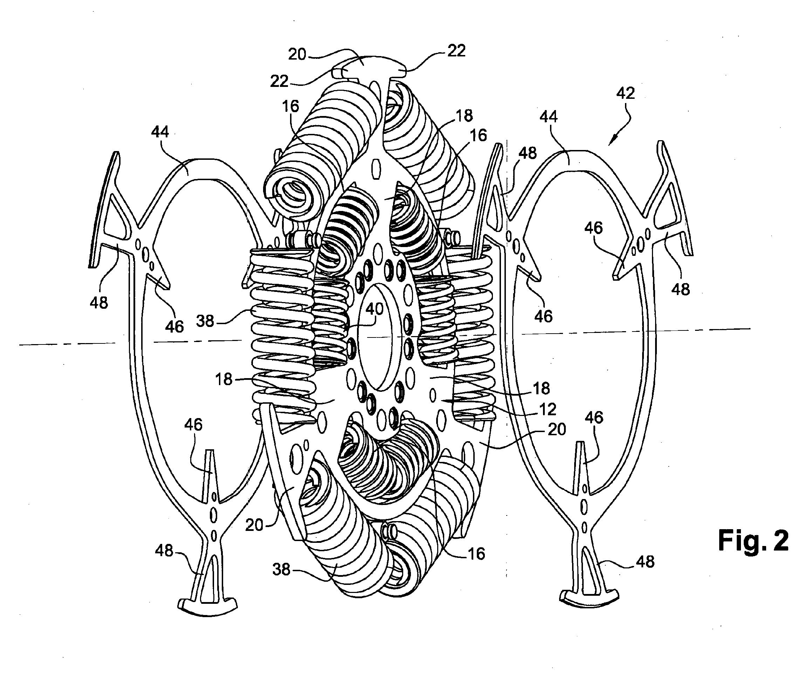

Le dispositif 10 comporte un élément d'entrée de couple qui est ici formé par un voile 12 radial qui est destiné à être lié en rotation au premier arbre moteur. Comme représenté plus en détail à la figure 2, le voile 12 présente une forme de rondelle circulaire coaxial à l'axe "B" et qui est destiné à être lié en rotation avec un moyeu 14.

Le voile 12 présente trois fenêtres 16 qui sont agencées en arc de cercle le long d'un anneau coaxial à l'axe "B". Les fenêtres sont réparties régulièrement autour de l'axe "B", de sorte que les fenêtres s'étendent sur un angle d'environ 120°. Les fenêtres 16 sont séparées circonférentiellement les unes des autres par trois rayons 18 radiaux de poussée.

Le voile 12 comporte en outre à sa périphérie trois pattes extérieures 20 radiales de poussée. Chaque patte extérieure 20 de poussée s'étend radialement en saillie par rapport au bord périphérique extérieur du voile 12.

L'extrémité-extérieure libre de chaque patte extérieure 20 de poussée présente en outre deux rebords 22 qui s'étendent circonférentiellement en saillie de part et d'autre de la patte extérieure 20. Chaque patte extérieure 20 présente ainsi la forme d'un "T".

Les pattes extérieures 20 sont ici agencées en coïncidence angulaire avec les rayons 18.

Comme représenté à la figure 1, le dispositif 10 d'amortissement présente en outre un élément de sortie de couple qui est ici formé par deux rondelles radiales de guidage 24 qui sont agencée axialement de part et d'autre du voile 12. Les deux rondelles de guidage 24 sont liées en rotation au deuxième arbre mené par l'intermédiaire d'un moyeu 26 cannelé.

Chaque rondelles de guidage 24 présente un flasque 26 radial qui est pourvu d'un passage 28 central pour permettre le passage de l'arbre moteur et du moyeu 14 du voile 12.

Chaque flasque 26 est en outre ajouré de trois fenêtres 30 intérieures dont chacune est agencée en coïncidence avec les fenêtres 16 du voile 12.

Chaque flasque 26 comporte en outre trois fenêtres 32 extérieures qui sont agencées en coïncidence avec les espaces délimités circonférentiellement par deux pattes extérieures 20 de poussée du voile 12.

Les fenêtres intérieures 30, respectivement extérieures 32 de chaque flasque 26 sont séparées circonférentiellement les unes des autres par des rayons 34 qui présentent une courbure axiale dirigée vers le voile 12.

La rondelle de guidage 24 arrière présente en outre une jupe 36 périphérique extérieure qui s'étend axialement vers l'autre rondelle de guidage 24. Le bord d'extrémité axiale libre de la jupe 36 est destiné à être fixé au bord périphérique extérieur de la rondelle de guidage 24 avant.

Ainsi, le flasque 26 de chaque rondelle de guidage 24 comporte un anneau intérieur 35 qui sépare radialement la passage 28 central des fenêtres intérieures 30, un anneau intermédiaire 37 qui sépare radialement les fenêtres intérieures 30 des fenêtres extérieures 32, et un anneau extérieur 39 qui sépare radialement les fenêtres extérieures 32 de la jupe 36.

Lorsque les deux rondelles de guidage 24 sont assemblées, leurs flasques 26 sont écartés d'une distance suffisante pour permettre au voile 12 de tourner sans frottement entre les deux flasques 26.

Le dispositif 10 d'amortissement comporte en outre une première rangée extérieure d'organes élastiques 38 à action circonférentielle et une deuxième rangée intérieure d'organes élastiques 40 à action circonférentielle.

Les organes élastiques 38, 40 sont ici formés par des ressorts hélicoïdaux d'axe principal d'orientation circonférentielle.

Dans la rangée intérieure, les organes élastiques 40 sont répartis en trois groupes de deux organes élastiques 40. Les organes élastiques 40 de chaque groupe sont logés circonférentiellement en série dans une fenêtre 16 commune associée du voile 12, comme cela est représenté à la figure 2.

Dans la rangée extérieure, les organes élastiques 38 sont répartis en trois groupes de deux organes élastiques 38. Les organes élastiques 38 de chaque groupe sont logés circonférentiellement en série entre deux pattes 20 de poussée associées du voile 12, comme cela est représenté à la figure 2.

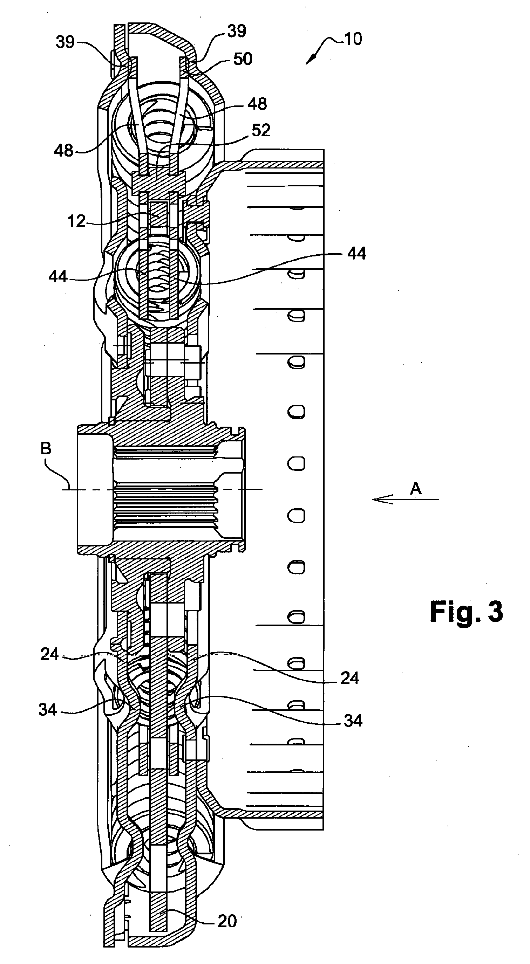

Les organes élastiques 38, 40 sont maintenus axialement dans leurs logements respectifs par les bords des fenêtres intérieures 30 et extérieures 32 des rondelles de guidage 24, comme cela est représenté plus en détail à la figure 3.

Chaque groupe de deux organes élastiques 38, 40 est ainsi intercalé circonférentiellement en série entre le voile 12 et les rondelles de guidage 24.

Plus précisément, pour la rangée intérieure, chaque groupe de deux organes élastiques 40 est intercalé circonférentiellement entre un rayon 18 du voile 12 et les rayons 34 correspondant des rondelles de guidage 24. Les rayons 34 des rondelles de guidage 24 présentent en effet une courbure telle que représentée à la figure 3 qui leur permet d'entrée en contact avec une extrémité d'un des organes élastiques 40 du groupe.

De même, pour la rangée extérieure, chaque groupe de deux organes élastiques 38 est intercalé circonférentiellement entre une patte de poussée 20 du voile 12 et les rayons 34 correspondant des rondelles de guidage 24. Les rayons 34 des rondelles de guidage 24 présentent aussi une courbure telle que représentée à la figure 3 qui leur permet d'entrée en contact avec une extrémité d'un des organes élastiques 40 du groupe.

Les deux organes élastiques 38, 40 de chaque groupe étant montés en série, les deux extrémités en vis-à-vis de ces deux organes élastiques 38, 40 sont susceptible de prendre appui l'une sur l'autre lors de la transmission d'un couple entre le voile 12 et les rondelles de guidage 24.

Pour que les organes élastiques 38, 40 soient sollicités sensiblement selon leur axe principal, il est connu d'équiper le dispositif 10 d'amortissement avec un organe de phasage 42.

Un tel organe de phasage 42 est représenté plus en détail à la figure 2. L'organe de phasage 42 est ici formé de deux anneaux radiaux de phasage 44 qui présentent des dimensions correspondant à l'anneau intermédiaire 37 des rondelles de guidage 24.

Chaque anneau de phasage 44 comporte en outre trois pattes intérieures de phasage 46 qui s'étendent radialement vers l'intérieur et trois pattes extérieures de phasage 48 qui s'étendent radialement vers l'extérieur. Chaque patte intérieure de phasage 46 est agencée en coïncidence angulaire avec une patte extérieure de phasage 48.

Les pattes de phasage 46, 48 sont agencées régulièrement autour de l'anneau de phasage 44, sensiblement à 120° les unes des autres.

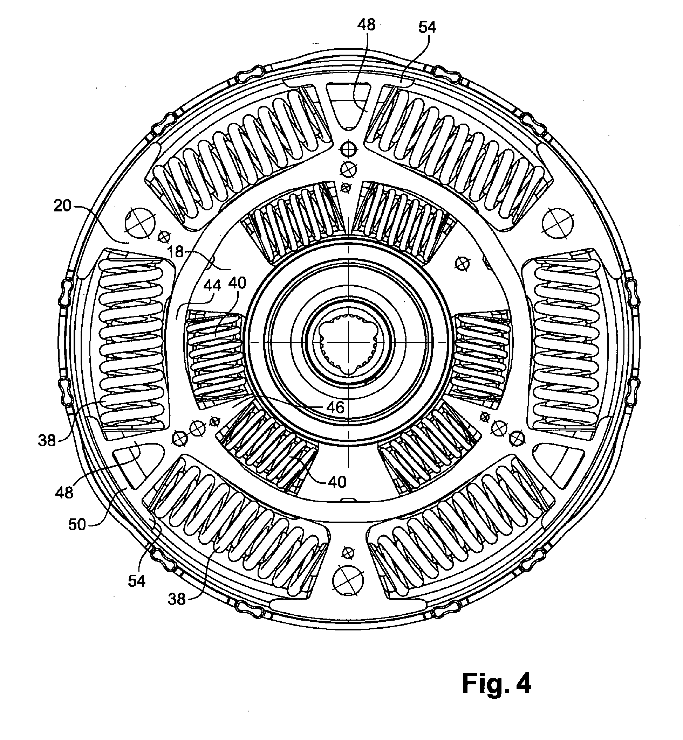

Comme représenté aux figures 3 et 4, chaque patte de phasage 46, 48 est interposée circonférentiellement entre les deux organes élastiques 38, 40 en série de chaque groupe.

Les anneaux de phasage 44 sont agencés axialement de part et d'autre du voile 12, comme représenté à la figure 3. Chaque anneau de phasage 44 est plus particulièrement monté flottant entre le voile 12 et la rondelle de guidage 24 associée. Les anneaux de phasage 44 sont maintenus en position par le contact entre les pattes de phasage 46, 48 et les organes élastiques 38, 40.

Lors du fonctionnement du dispositif 10 d'amortissement, les organes élastiques 38, 40 sont généralement comprimés de manière à amortir les variations brusques de couple. Le voile 12 tourne d'un angle déterminé autour de l'axe "B" par rapport aux rondelles de guidage 24 en provoquant la compression des organes élastiques 38, 40 de chaque groupe. Du fait de cette compression, les anneaux de phasage 44 tourne de la moitié de l'angle déterminé par rapport aux rondelles de guidage 24.

On a constaté que le dispositif 10 d'amortissement était susceptible de vibrer de manière néfaste pour certaines vitesses de rotation élevées et/ou pour certaines valeurs de couple.

Pour résoudre ce problème, on propose d'équiper l'organe de phasage 42 avec au moins deux éléments de frottement qui sont susceptibles d'être écartées axialement par application d'une force axiale de serrage pour qu'une face frottement 50 desdits éléments de frottement soit serrée axialement contre chacune une face interne des rondelles de guidage 24. Ainsi, le contact entre l'organe de phasage 42 et les rondelles de guidage 24 permet de supprimer certaines vibrations.

Les éléments de frottement sont agencés par paire entre les deux rondelles de guidage 24, de manière que-deux faces de frottement 50 d'une paire soient alignées axialement. Ainsi, en écartant axialement les deux éléments de frottement d'une paire, la face de frottement 50 de chacun va frotter contre la face interne d'une rondelle de guidage 24 associée.

Les éléments de frottement sont avantageusement formés par les pattes extérieures de phasage 48. Chaque face de frottement 50 est portée par un tronçon d'extrémité extérieur libre de chaque patte extérieure de phasage 48. Chaque face de frottement 50 est ainsi agencée axialement en vis-à-vis de l'anneau extérieure 39 d'une des rondelles de guidage 24.

Pour permettre le serrage de chaque face de frottement 50, chaque patte extérieure de phasage 48 est flexible dans une direction axiale.

Selon une variante non représentée de l'invention, les éléments de frottement sont formés par des pattes flexibles distinctes des pattes de phasage. Il s'agit par exemple de pattes qui s'étendent radialement vers l'intérieur depuis un deuxième anneau périphérique extérieur qui est porté par chaque patte de phasage.

Les faces de frottement 50 sont ici serrées contre la rondelle de guidage 24 associée par une force de serrage dite "statique". Il s'agit d'une force axiale de serrage qui présente une intensité indépendante de la vitesse de rotation du dispositif 10 d'amortissement.

La force de serrage statique est appliquée en permanence par des moyens élastiques de serrage pour pousser les éléments de frottement.

Avantageusement, les pattes extérieures de phasage 48 des deux anneaux de phasage 44 sont flexibles élastiquement. Au repos, Chaque patte extérieure de phasage 48 d'un anneau de phasage 44 est inclinée axialement dans une direction opposée à l'autre anneau de phasage 44. Ainsi, dans cet état de repos, la distance axiale entre les faces de frottement 50 d'une paire est supérieure à la distance axiale entre les anneaux extérieurs 39 des deux rondelles de guidage 24. Les pattes extérieures de phasage 48 sont ainsi montées précontraintes axialement entre les rondelles de guidage 24.

Dans l'exemple représenté à la figure 3, les deux anneaux de phasage 44 sont appuyés axialement l'un contre l'autre par l'intermédiaire d'une entretoise 52. Ainsi, la réaction de la force de serrage statique d'une face de frottement 50 contre une rondelle de guidage 24 est reprise par l'autre rondelle de guidage 24 par l'intermédiaire de l'autre face de frottement 50 de la paire.

Selon une variante non représenté de l'invention, l'organe de phasage comporte un unique anneau comportant des paires de pattes de phasage, les deux pattes d'une paire étant en coïncidence axiale.

Selon une variante non représentée de l'invention, la réaction de la force de serrage statique d'un élément de frottement est reprise par le voile. Dans ce cas, chaque anneau de phasage est en appui axial sur le voile.

En outre, on a constaté que la force de serrage statique n'était pas suffisante pour atténuer les vibrations du dispositif 10 d'amortissement pour certaines vitesses de rotation très élevées. On constate dans certaines applications que le frottement doit augmenter avac la vitesse pour réduire avantageusement les vribrations.

Pour remédier à ce problème, le dispositif 10 d'amortissement propose qu'une force de serrage dynamique soit superposée à la force de serrage statique de chaque face de frottement 50. Cette force de serrage dynamique augmente proportionnellement à la vitesse de rotation, ce qui permet d'atténuer plus fortement les vibrations qui apparaissent à vitesse élevée sans pour autant diminuer l'efficacité du dispositif 10 d'amortissement à faible vitesse à cause d'un frottement trop important.

Pour ce faire, chaque élément de frottement formé par une patte extérieure de phasage 48 comporte au moins une face de retenue 54 d'au moins l'un des organes élastique 38 à l'encontre de la force centrifuge. La face de retenue 54 est formée par une face intérieure d'un rebord qui s'étend circonférentiellement de part et d'autre de l'extrémité extérieure libre de la patte extérieure de phasage 48.

Chaque face de retenue 54 est en contact permanent avec l'organe élastique 38. Les faces de retenue 54 d'une paire de pattes de phasage 48 sont agencées axialement à distance l'une de l'autre et l'organe élastique 38 est inséré partiellement entre lesdites deux faces de retenue 54 à la manière d'un coin. Ainsi, lorsque le dispositif 10 d'amortissement tourne, les organes élastiques sont poussés radialement entre les deux faces de retenue 54 de manière à les écarter. Ceci provoque l'augmentation de la charge radiale et axiale sur les pattes extérieures de phasage 48 de la paire, et ainsi, le serrage de chaque face de frottement 50 associées sont les rondelles de guidage 24.

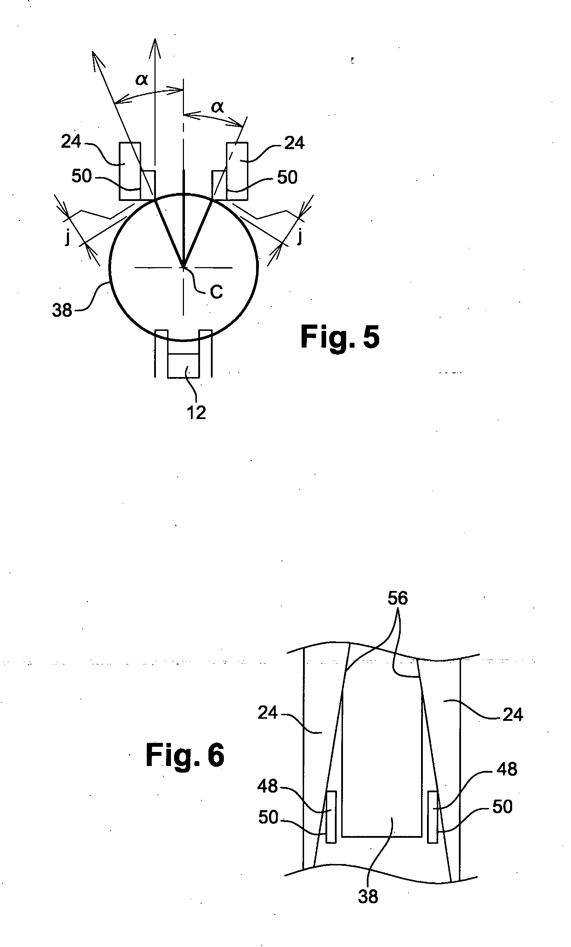

Pour permettre la réalisation de cet effet, et comme illustré à la figure 5, il existe un jeu radial "j" entre le bord extérieure de la fenêtre extérieure 32 correspondante de chaque rondelle de guidage 24 et l'organe élastique 38. Le jeu radial "j" est suffisant pour permettre à l'organe élastique 38 d'agir sur les faces de retenue 54.

De manière plus précise, comme représenté à la figure 5, chaque face de retenue 54 d'une paire est en contact avec l'organe élastique 38 selon angle d'appui "α" par rapport à la direction radiale. La force exercé par l'organe élastique 38 sur la face de retenue 54 sous l'effet de la force centrifuge peut donc se décomposer en une force axiale de serrage dynamique et une force verticale.

Pour que cet effet puisse avoir lieu, l'angle d'appui "α" est compris entre 1° et 89°. On constate que la force axiale de serrage dynamique sera proportionnelle à la fois à l'angle d'appui "α" et à la force centrifuge.

L'angle d'appui "α" est de préférence compris entre 15° et 45°.

Selon une variante non représentée de l'invention, les faces de frottement des éléments de frottement ne sont pas serrées contre les rondelles de guidage lorsque le dispositif d'amortissement ne tourne pas. Ainsi, le frottement n'a lieu que lorsque le dispositif d'amortissement tourne au-delà d'une vitesse de seuil. Dans ce cas, le jeu radial entre les fenêtres et les organes élastiques est plus important car les organes élastiques sont susceptibles d'être déplacés radialement.

Selon un autre aspect de l'invention, le dispositif 10 d'amortissement est aussi équipé de moyens pour augmenter la force de serrage statique en fonction du couple transmis par le voile 12. Lorsque l'angle de rotation du voile 12 par rapport aux rondelles de guidage 24 est d'autant plus grand que le couple transmis est important.

Pour permettre cette augmentation de la force de serrage statique, la face interne de l'anneau extérieur 39 des deux rondelles de guidage 24 comportent des rampes 56 qui s'étendent circonférentiellement en arc de cercle le long du trajet que chaque face de frottement 50 est susceptible de parcourir lors d'un amortissement. Ainsi, la distance axiale entre les deux rondelles de guidage 24 est susceptible de varier en fonction de l'angle de rotation des anneaux de phasage 44.

La position axiale des faces de frottement 50 est ainsi susceptible de varier par rapport à la face de réaction de la force de serrage statique, la face de réaction étant ici formée par la face interne de l'autre rondelle de guidage 24. Ceci entraîne une variation de la force de serrage statique en fonction de la position angulaire des anneaux de phasage 44 par rapport aux rondelles de guidage 24.

Le dispositif 10 d'amortissement réalisé selon les enseignements de l'invention est ainsi peu onéreux à réaliser car il comporte ne nécessite pas d'ajouter des éléments, notamment pour produire la force de serrage statique.

Le dispositif 10 d'amortissement est aussi particulièrement efficace pour amortir des vibrations qui interviennent spécifiquement lorsque la vitesse de rotation est élevée, indépendamment du couple transmis.

En outre, la force de serrage dynamique est très aisé à maîtriser car elle dépend essentiellement de l'angle d'appui "α" de l'organe élastique 38 sur la face de retenue 54. Un tel paramètre est aisé à maîtriser.

Le dispositif 10 d'amortissement permet aussi d'amortir des vibrations qui interviennent spécifiquement lorsque le couple transmis est élevé, indépendamment de la vitesse de rotation.

## Revendications

1. Dispositif (10) d'amortissement angulaire entre un premier arbre et un deuxième arbre coaxiaux dans un système d'accouplement temporaire humide de véhicule automobile et qui comporte :
- un voile (12) radial qui est destiné à être lié en rotation au premier arbre ;
- deux rondelles radiales de guidage (24) qui sont agencée axialement de part et d'autre du voile (12) et qui sont liées en rotation au deuxième arbre ;
- au moins deux organes élastiques (38) à action circonférentielle qui sont intercalés circonférentiellement en série entre le voile (12) et les rondelles de guidage (24) ;
- un organe de phasage (42) qui comporte au moins une patte radiale de phasage (48) qui est interposée circonférentiellement entre les deux organes élastiques (38) en série, l'organe de phasage (42) comportant au moins deux éléments de frottement (48) qui sont susceptibles d'être écartées axialement par application d'une force axiale de serrage pour être serrés axialement contre chacune des rondelles de guidage (24) ;
**caractérisé en ce que** chaque élément de frottement (48) comporte au moins une face de retenue (54) d'au moins l'un des organes élastique (38) à l'encontre de la force centrifuge, les faces de retenue (54) étant agencées à distance axialement l'une de l'autre et l'organe élastique (38) étant inséré partiellement entre les deux faces de retenue (54) à la manière d'un coin de manière que la composante axiale de la force centrifuge exercée sur chaque face de retenue (54) par l'organe élastique (38) serre chaque élément de serrage (48, 50) contre la rondelle de guidage (24) associée avec une force dynamique de serrage.

2. Dispositif (10) selon la revendication précédente, **caractérisé en ce que** chaque face de retenue (54) est en contact avec l'organe élastique (38) selon angle d'appui (α) qui est compris entre 1° et 89° par rapport à la direction radiale.

3. Dispositif selon la revendication précédente, **caractérisé en ce que** l'angle d'appui (α) est compris entre 15° et 45°.

4. Dispositif selon l'une quelconque des revendications précédentes, **caractérisé en ce que** une force de serrage statique est appliquée en permanence par des moyens élastiques de serrage (48) pour écarter les éléments de frottement (48, 50).

5. Dispositif (10) selon la revendication précédente, **caractérisé en ce que** chaque élément de frottement (48) est formé par une patte élastiquement déformable en flexion, ladite patte déformable (48) étant montée précontrainte contre la rondelle de guidage (24) associée.

6. Dispositif (10) selon la revendication précédente, **caractérisé en ce qu'**au moins l'une des pattes déformables est formée par une patte de phasage (48).

7. Dispositif (10) selon l'une quelconque des revendications 4 à 5, **caractérisé en ce que** la face interne (39) des deux rondelles de guidage (24) comportent des rampes (56) en vis-à-vis de manière à faire varier la position axiale des faces de frottement (50) par rapport à une face de réaction de manière que la force de serrage statique varie en fonction de la position angulaire de l'organe de phasage (42) par rapport aux rondelles de guidage (24).

## Patentansprüche

1. Vorrichtung (10) zur winkligen Dämpfung zwischen einer ersten Welle und einer dazu koaxialen zweiten Welle in einem nassen System zum temporären Kuppeln eines Kraftfahrzeugs, umfassend:
- einen radialen Flansch (12), der dazu bestimmt ist, drehfest mit der ersten Welle verbunden zu werden;
- zwei radiale Führungsscheiben (24), die axial auf beiden Seiten des Flanschs (12) angeordnet und drehfest mit der zweiten Welle verbunden sind;
- zumindest zwei umfangsmäßig wirksame elastische Organe (38), die zwischen den Flansch (12) und die Führungsscheiben (24) in Umfangsrichtung in Reihe geschaltet sind;
- ein Organ (42) zur Phaseneinteilung, das zumindest eine radiale Klaue (48) zur Phaseneinteilung umfasst, die in Umfangsrichtung zwischen die beiden in Reihe geschalteten elastischen Organe (38) zwischengeschaltet ist, wobei das Organ (42) zur Phaseneinteilung zumindest zwei Reibelemente (48) umfasst, die dazu geeignet sind, durch Aufbringen einer axialen Spannkraft axial zurückgedrängt zu werden, um axial gegen jeweils eine der Führungsscheiben (24) gespannt zu werden;
**dadurch gekennzeichnet, dass** jedes Reibelement (48) mindestens eine Fläche (54) zum Zurückhalten von zumindest einem der elastischen Organe (38) entgegen der Zentrifugalkraft aufweist, wobei die Rückhalteflächen (54) in einem axialen Abstand voneinander angeordnet sind und das elastische Organ (38) in der Art eines Keils zum Teil zwischen die beiden Rückhalteflächen (54) eingeschoben ist, damit die axiale Komponente der von dem elastischen Organ (38) auf jede Rückhaltefläche (54) ausgeübten Zentrifugalkraft jedes Spannelement (48, 50) mit einer dynamischen Spannkraft gegen die zugeordnete Führungsscheibe (24) presst.

2. Vorrichtung (10) nach dem vorherigen Anspruch, **dadurch gekennzeichnet, dass** jede Rückhaltefläche (54) mit dem elastischen Organ (38) über einen Anlagewinkel (α) in Kontakt ist, der mit Bezug auf die radiale Richtung zwischen 1° und 89° liegt.

3. Vorrichtung (10) nach dem vorherigen Anspruch, **dadurch gekennzeichnet, dass** der Anlagewinkel (α) zwischen 15° und 45° liegt.

4. Vorrichtung (10) nach einem der vorherigen Ansprüche, **dadurch gekennzeichnet, dass** eine permanent wirksame statische Spannkraft durch elastische Spannmittel (48) aufgebracht wird, um die Reibelemente (48, 50) zur Seite zu rücken.

5. Vorrichtung (10) nach dem vorherigen Anspruch, **dadurch gekennzeichnet, dass** jedes Reibelement (48) durch eine elastisch auf Biegung verformbare Klaue gebildet ist, wobei die verformbare Klaue (48) vorgespannt gegen die zugeordnete Führungsscheibe (24) montiert ist.

6. Vorrichtung (10) nach dem vorherigen Anspruch, **dadurch gekennzeichnet, dass** mindestens die eine der verformbaren Klauen durch eine Klaue (48) zur Phaseneinteilung gebildet ist.

7. Vorrichtung (10) nach einem der Ansprüche 4 bis 5, **dadurch gekennzeichnet, dass** die Innenfläche (39) der beiden Führungsscheiben (24) einander gegenüberliegende Rampen (56) aufweist, um die axiale Position der Reibflächen (50) relativ zu einer Reaktionsfläche in der Art zu verändern, dass die statische Spannkraft in Abhängigkeit von der Winkelposition des Organs (42) zur Phaseneinteilung relativ zu den Führungsscheiben (24) variiert.

## Claims

1. Angular damping device (10) between a coaxial first shaft and a coaxial second shaft in a temporary wet coupling system in a motor vehicle comprising:
- a radial plate (12) intended to be linked in rotation with the first shaft;
- two radial guide washers (24) arranged axially on either side of the plate (12) which are linked in rotation with the second shaft;
- at least two resilient members (38) acting circumferentially which are inserted circumferentially in series between the plate (12) and the guide washers (24);
- a phasing member (42) comprising at least one radial phasing tongue (48) placed circumferentially between the two resilient members (38) in series, the phasing member (42) comprising at least two friction elements (48) which can be moved apart axially through the application of an axial tightening force in order to be axially tightened against each of the guide washers (24);
**characterised in that** each friction element (48) comprises at least one retaining surface (54) retaining at least one of the resilient members (38) against centrifugal force, the retaining surfaces (54) being located at an axial distance from each other and the resilient member (38) being inserted partly between the two retaining surfaces (54) in the manner of a wedge so that the axial component of the centrifugal force exerted on each retaining surface (54) by the resilient member (38) tightens each tightening element (48, 50) against the guide washer (24) associated with a dynamic tightening force.

2. Device (10) according to the preceding claim, **characterised in that** each retaining surface (54) is in contact with the resilient member (38) at a bearing angle (α) which is between 1° and 89° with respect to the radial direction.

3. Device according to the preceding claim, **characterised in that** the bearing angle (α) is between 15° and 45°.

4. Device according to any one of the preceding claims, **characterised in that** a static tightening force is permanently applied by resilient tightening means (48) to keep the friction elements (48, 50) apart.

5. Device (10) according to the preceding claim, **characterised in that** each friction element (48) comprises a tongue which is resiliently deformable in flexion, the said deformable tongue (48) being mounted in a prestressed way against the associated guide washer (24).

6. Device (10) according to the preceding claim, **characterised in that** at least one of the deformable tongues comprises a phasing tongue (48).

7. Device (10) according to either of claims 4 or 5, **characterised in that** the inner surface (39) of the two guide washers (24) comprises ramps (56) facing each other in such a way as to vary the axial position of the friction surfaces (50) in relation to a reaction surface in such a way that the static tightening force varies in relation to the angular position of the phasing member (42) in relation to the guide washers (24).
